# EUROPÄISCHE PATENTSCHRIFT

(11) **EP 3 247 197 B1**
(45) Veröffentlichungstag und Bekanntmachung des Hinweises auf die Patenterteilung: **04.09.2019**
(21) Anmeldenummer: 16702325.8
(22) Anmeldetag: 13.01.2016
(51) Int. Cl.: A01G 27/00, A01G 27/06

(54) **AUFBEWAHRUNGSBEHÄLTER**
STORAGE CONTAINER
CONTENANT DE RÉCEPTION

(30) Priorität: 21.01.2015 DE 202015100254 U
(43) Veröffentlichungstag der Anmeldung: 29.11.2017
(73) Patentinhaber: Pöppelmann Holding GmbH & Co. KG, 49393 Lohne (DE)
(72) Erfinder: LESCH, Matthias, 49393 Lohne (DE); MAJCHSZAK, Christoph, 49393 Lohne (DE)
(74) Vertreter: Wischmeyer, André
(86) Internationale Anmeldenummer: PCT/EP2016/000057
(87) Internationale Veröffentlichungsnummer: WO 2016/116263

(56) Entgegenhaltungen:
- WO-A1-99/35899
- WO-A1-2012/058766
- DE-A1-102011 005 195
- DE-U1-202009 009 762
- DE-U1-202013 104 366
- US-A- 4 356 665
- US-A- 5 860 249
- US-A1- 2013 291 435

## Beschreibung

Die vorliegende Erfindung betrifft einen Aufbewahrungsbehälter für einen Pflanztopf mit einem Boden, mit einer mit dem Boden verbundenen Seitenwand sowie mit einer Wasserstandanzeige, wobei der Aufbewahrungsbehälter mit dem Boden und vorzugsweise zumindest einem Teil der Seitenwand ein Wasserreservoir ausbildet. Insbesondere betrifft die Erfindung einen als Transporttopf für einen Pflanztopf ausgebildeten Aufbewahrungsbehälter.

Im gewerblichen Gartenbau werden die zu verkaufenden Pflanzen oftmals zunächst in Pflanztöpfen großgezogen. Für den Transport vom Herstellungsort zum Großhändler und weiter zum Einzelhändler werden die Pflanztöpfe dann in Trays oder in Transport- oder Aufbewahrungsbehälter gesetzt, deren Wasserreservoir mit einer von der Pflanze, der Witterung und/oder der voraussichtlichen Disposition-, Transport- und Angebotszeit abhängigen Wassermenge befüllt wird. Ein solcher mit einer Wasserstandanzeige versehener Transportbehälter ist beispielsweise in der DE 102011005195 A1 offenbart. Beim Einzelhändler werden die Pflanztöpfe dann für den Verkauf aus dem Transporttopf entnommen und in einen dekorativen Übertopf umgesetzt Weitere Beispiele für solche Behälter mit einem transparenten Sichtfenster zur Anzeige des Wasserstandes sind aus WO 99/35899, US 2013/0291435, US 5 860 249 und US 4 356 665 bekannt.

Es ist Aufgabe der vorliegenden Erfindung, einen einfach herzustellenden Aufbewahrungsbehälter für einen Pflanztopf zu schaffen, der das Handling der Pflanztöpfe von seiner Herstellung bis zum Verkauf erleichtert.

Diese Aufgabe wird gelöst durch einen Gegenstand gemäß Anspruch 1. Vorteilhafte Ausgestaltungen der Erfindung sind den auf diesen Anspruch rückbezogenen Unteransprüchen sowie der nachfolgenden Beschreibung zu entnehmen. Erfindungsgemäß umfasst die Seitenwand des Aufbewahrungsbehälters wenigstens ein folienartiges und als Dekorelement ausgebildetes Flächenelement, welches eine ein Sichtfenster aufweisende Wasserstandanzeige zur Anzeige eines Wasserstandes des Wasserreservoirs zumindest mit ausbildet. Das Flächenelement bildet weiterhin wenigstens teilweise die Außenwand des Aufbewahrungsbehälters aus. Die Seitenwand ohne ihr Dekorelement ist weiterhin zumindest teilweise aus einem transparenten Kunststoff ausgebildet. Dies ist insbesondere vorteilhaft für erfindungsgemäße Varianten, bei denen zunächst das Grundgerüst des Aufbewahrungsbehälters spritzgegossen oder thermogeformt hergestellt und anschließend das Flächenelement aufgebracht wird. Durch das ein Sichtfenster ausbildende und folienartige Flächenelement ergibt sich hinsichtlich der Ausbildung einer Wasserstandanzeige eine Vielzahl von Variationsmöglichkeiten. Das Flächenelement ist als separates Element je nach gewünschter Ausbildung der Wasserstandanzeige vorkonfigurierbar. Somit kann das Flächenelement einfach geändert werden, um mit dem spritzgegossen oder thermogeformt hergestellten weiteren Aufbewahrungsbehälter für den Pflanztopf zusammen gebracht zu werden. Werkzeugformen können somit unverändert bleiben, während der Aufbewahrungsbehälter mit unterschiedlichen Wasserstandanzeigen herstellbar ist.

Der Aufbewahrungsbehälter ist insbesondere in einer erfindungsgemäßen Ausbildung mit einem als Dekorelement ausgebildeten Flächenelement gleichzeitig als Dekorübertopf und als Transportbehälter verwendbar. Es ergibt sich durch das Dekorelement ein höherwertiges Erscheinungsbild des Aufbewahrungsbehälters, das sich deutlich von mit Pflanztöpfen versehenen Transportbehältern abhebt, gleichwohl ist trotz des Dekorelements die Funktionalität eines Transportbehälters gewahrt. Dies gilt insbesondere für entlang der Seitenwand geschlossene Aufbewahrungsbehälter ohne zum Innenraum des Aufbewahrungsbehälters durchgängige Bereiche, durch die Wasser oder Substrat aus dem Aufbewahrungsbehälter austreten kann.

Der Pflanztopf muss weiterhin für einen repräsentativen Verkaufsauftritt nicht in einen Übertopf umgesetzt werden, er kann für die Verkaufspräsentation im Aufbewahrungsbehälter verbleiben und je nach Dekorelement kann sogar auf Geschenkverpackungen verzichtet werden.

Das Dekorelement ist als ein Teil der Seitenwand üblicherweise aus einem anderen Material als das, aus dem der weitere Teil der Seitenwand hergestellt ist. Es kann sich bei dem Dekorelement beispielsweise um ein aufgeklebtes, aufgedrucktes oder in die weitere Seitenwand integriertes Etikett oder Label mit einem Dekor handeln. Mit Ausnahme des Dekorelements ist die Seitenwand mit dem Boden beispielsweise einstückig spritzgegossen oder thermogeformt hergestellt, während das Dekorelement nachträglich aufgebracht oder bereits während der Herstellung des restlichen Teils des Aufbewahrungsbehälters in diesen integriert werden kann. Als Boden wird hierbei beispielsweise zumindest derjenige Teil des Aufbewahrungsbehälters verstanden, der mit seiner Unterseite eine Auflagefläche zum Untergrund bereitstellt. Bei Verwendung von Aufstellrändern handelt es sich oftmals um den zwischen diesen liegenden Bereich des unteren Teils des Aufbewahrungsbehälters.

Das als Dekorelement ausgebildete Flächenelement erstreckt sich in Umfangsrichtung des Aufbewahrungsbehälters, d.h. um eine vertikal zu einer Aufstandsebene stehende Mittelachse des Aufbewahrungsbehälters zumindest abschnittsweise herum, wobei der Aufbewahrungsbehälter im Querschnitt (Horizontalschnitt parallel zu einer Aufstandsebene) kreisförmig, oval, anders gekrümmt oder mehreckig ausgebildet sein kann. Vorzugsweise erstreckt sich das Dekorelement in Umfangsrichtung zumindest über 20%, vorzugsweise über zumindest 30% des Umfangs herum. Ab einer solchen Größe kann der mit einem Dekorelement versehene Aufbewahrungsbehälter mit seiner einem Endkunden im Einzelhandel zugewandten Seite einen herkömmlichen Übertopf gut ersetzen bzw. darstellen. Besonders bevorzugt erstreckt sich das Dekorelement in Umfangsrichtung bis auf einen oder mehrere für das Sichtfenster freigelassene Bereiche vollständig herum.

Das Flächenelement verläuft in Richtung seiner flächigen Erstreckung parallel zur flächigen Erstreckung der weiteren Seitenwand. In einer Draufsicht auf die flächige Erstreckung des als Dekorelement ausgebildeten Flächenelements kann dieses randseitig beliebige Konturen aufweisen und beispielsweise eckig, rund oder oval geformt sein. Insbesondere verläuft es über einen überwiegenden Bereich der weiteren Seitenwand.

In Richtung der Vertikalen erstreckt sich das Dekorelement zumindest ebenfalls über zumindest 20 % der Höhe, noch bevorzugter über mehr als 50% der Höhe des Aufbewahrungsbehälters.

Unter einem Dekorelement wird hierbei eine ein- oder auch mehrlagige Schicht oder Beschichtung mit einer graphischen Gestaltung inklusive etwaiger Informationsinhalte verstanden, die sich von dem Rest des Aufbewahrungsbehälters insbesondere im Material unterscheidet und die Seitenwand dekoriert. Es versteht sich, dass das Dekorelement auch Ausnehmungen, freigelassene oder transparente bzw. transluzente Bereiche aufweisen kann. Das Dekorelement kann durch ein Etikett oder Label oder alternativ oder ergänzend auch zumindest teilweise als farbige Beschichtung auf den weiteren Teil der Seitenwand lediglich aufgedruckt sein und wird dann durch die Druckschicht oder -schichten gebildet. Statt eines einzigen Dekorelements kann ein erfindungsgemäßer Aufbewahrungsbehälter auch mehrere Dekorelemente aufbewahren.

Eine Wasserstandanzeige wird durch zumindest eine Einsichtnahmemöglichkeit, durch die die Höhe des Wasserpegels im Aufbewahrungsbehälter von seitlich der Seitenwand sichtbar wird, realisiert. Vorzugsweise handelt es sich um ein Sichtfenster, welches zumindest ausreichend durchsichtig und insbesondere transparent ist, um einen Wasserpegel erkennen zu können.

Vorzugsweise erstreckt sich das Sichtfenster soweit in Richtung der Mittelachse des Aufbewahrungsbehälters, dass eine Unterkante eines in den Aufbewahrungsbehälter eingesetzten Pflanztopfes als maximales Wasserfüllstandsniveau ersichtlich ist.

Durch die Wasserstandanzeige, die durch das Dekorelement zumindest mit ausgebildet wird, beispielsweise über eine äußere und gegebenenfalls umlaufende Begrenzung des Sichtfensters, trägt das Dekor erfindungsgemäß zur Verwendbarkeit des Aufbewahrungsbehälters als Transportbehälter bei. Die Wasserstandanzeige beispielsweise in Form des Sichtfensters kann in Abhängigkeit verschiedener Dekorvarianten unterschiedlich ausgebildet und vom Hersteller des Aufbewahrungsbehälters auf Kundenwunsch hin angepasst werden.

Das Wasserreservoir ist zumindest zum Teil in einem Maße durch die Seitenwand mit ausgebildet, dass von außen und seitlich der Seitenwand eine Anzeige bzw. ein Einblick auf die Höhe des Wasserpegels möglich wird. Vorteilhafterweise handelt es sich bei dem Wasserreservoir um einen ringsum von der Seitenwand umrandeten und nach unten hin vom Boden begrenzten, unteren Teil des (Pflanztopf-) Aufbewahrungsbehälters.

Die Erfindung betrifft bevorzugt Aufbewahrungsbehälter für einen einzigen Pflanztopf. In einer weiteren Ausgestaltung der Erfindung kann es sich bei dem Aufbewahrungsbehälter jedoch auch um mit einer Mehrzahl von Pflanztöpfen bestückbaren Aufbewahrungsbehälter handeln.

Erfindungsgemäß ist die Seitenwand ohne ihr Dekorelement zur Ausbildung der Wasserstandanzeige und insbesondere des Sichtfensters zumindest teilweise aus einem transparenten Kunststoff ausgebildet. Hierbei kann es sich um einen bis auf das Dekorelement vollständig aus transparentem Kunststoff ausgebildeten Pflanztopfaufbewahrungsbehälter handeln. Bei einem in 2K- oder im Bi-Injektionsverfahren hergestellten weiteren Teil der Seitenwand, der in der Regel nicht durch das Dekorelement gestellt wird, kann auch nur ein das Sichtfenster betreffender Bereich aus transparentem Kunststoff ausgebildet sein. Dieser kann beispielsweise in einem dekorfreien Teil der Seitenwand das Sichtfenster zumindest mit ausbilden.

Eine besonders einfache und gleichzeitig durch ein Dekor hochwertig erscheinende Ausführungsform eines Aufbewahrungsbehälters ist dann geschaffen, wenn das Dekorelement das Sichtfenster begrenzt, hierdurch mit ausbildet und der übrige weitere Teil der Seitenwand komplett aus transparentem Kunststoff hergestellt ist. Während so das vorzugsweise ausschließlich als Teil der Seitenwand ausgebildete Dekorelement bezüglich einer Positionierung in Umfangsrichtung des Aufbewahrungsbehälters unabhängig sein kann, kann durch eine Ausnehmung oder Begrenzung des Dekorelements das (eine oder mehrere) Sichtfenster und somit die Wasserstandanzeige ausgebildet werden. Das Sichtfenster wird somit durch eine oder mehrere Freilassungen im Dekor bzw. durch einen transparenten Bereich des Dekors und einen zusätzlichen transparenten weiteren Teil oder einer Ausnehmung der Seitenwand ausgebildet.

Eine Begrenzung des Sichtfensters liegt dann vor, wenn in einer Draufsicht auf die Seitenwand das Sichtfenster in Umfangs- und/oder vertikaler Richtung von dem Dekorelement begrenzt wird.

Da das Dekorelement selbst in der Regel keine bzw. nur eine geringe Strukturgebende Funktion für die Seitenwand aufweist, wird die Seitenwandstabilität durch das weitere Kunststoffmaterial der Seitenwand hergestellt. Insofern kann das Dekor auch einfach auf die weitere Seitenwand des Topfes aufgeklebt sein und bildet diese dennoch mit aus. Durch die Verwendung unterschiedlicher Dekore oder Dekorelemente können unterschiedliche Wasserstandanzeigen bzw. Einsichtnahmemöglichkeiten auf das Innere des Aufbewahrungsbehälters realisiert werden.

Das Sichtfenster kann wie beschrieben durch einen dekorelementfreien Teil der Seitenwand mit ausgebildet und zum Beispiel von diesem begrenzt werden. Insbesondere stellt bei einer erfindungsgemäßen Ausbildung, bei der der weitere, nicht zum Dekorelement gehörende Teil der Seitenwand aus transparentem Kunststoff ausgebildet ist, dieser Teil die Einsichtnahmemöglichkeit bereit. Sofern bei einem in 2K- oder im Bi-Injektionsverfahren hergestellten Aufbewahrungsbehälter ein dekorfreier Bereich nur teilweise transparent ausgebildet ist, können sowohl transparente wie auch nicht transparente Bereiche vom Dekorelement begrenzt werden. Das Dekorelement oder Dekor kann insbesondere Markierungen für die Wasserstandanzeige aufweisen.

Zur Ausbildung einer Art Lupe kann das Sichtfenster konvex ausgebildet sein. Vorzugsweise ist es zumindest außenseitig konvex ausgebildet. Durch eine Verdickung und den hiermit einhergehenden Aufweitungseffekt des Lichts kann ein genaueres Ablesen des Wasserstandes und insbesondere der Übergangslinie vom Wasser in den darüber liegenden Bereich klarer erkannt werden.

Erfindungsgemäß ist das Flächenelement folienartig und insbesondere als In-Mould-Label ausgebildet, was bei entsprechender Materialwahl eine gute Integration des Flächenelements mit der weiteren Seitenwand ermöglicht. Das In-Mould-Label ist fest und insbesondere wasserdicht mit der weiteren Seitenwand verbunden.

Das als Dekorelement ausgebildete Flächenelement kann sowohl außenseitig wie auch innenseitig auf die weitere Seitenwand aufgedruckt oder als Aufkleber aufgeklebt werden, was eine flexible und gleichzeitig relativ kostengünstige Ausbildung eines erfindungsgemäßen Aufbewahrungsbehälters ermöglicht.

Eine bereits erwähnte besonders vorteilhafte Variante der Erfindung wird durch einen Aufbewahrungsbehälter realisiert, bei dem das Dekorelement das Sichtfenster begrenzt, hierdurch mit ausbildet und die weitere Seitenwand aus transparentem Kunststoff hergestellt ist. Dekorfreie oder vom Dekorelement transparent belassene oder ausgesparte Bereiche, die vom Dekorelement begrenzt werden, bilden gemeinsam mit der weiteren Seitenwand ein oder mehrere Sichtfenster aus.

Sofern das Dekorelement im Bereich des Sichtfensters transparent ausgebildet ist, bildet ein zwei- oder mehrschichtiger, transparenter Teil der Seitenwand das Sichtfenster aus.

Eine besonders einfache und für das Ablesen von Wasserständen bei unterschiedlich hohen Füllungen des Wasserreservoirs gut verwendbare Variante der Erfindung ergibt sich bei einer Seitenwand mit einem einsehbaren Bereich, der zur Ausbildung des Sichtfensters über die gesamte Höhe (zumindest jedoch über 50% der Höhe) der Seitenwand von dem Dekor oder dem Dekorelement begrenzt ist. Diese Begrenzung muss nicht vertikal verlaufen, sondern kann auch spiralförmig oder anders über die Höhe in Umfangsrichtung variierend durch das Dekorelement ausgebildet werden. Auch sind mehrere über die Höhe und/oder den Umfang unterschiedlich positionierte Sichtfenster durch das Dekor bzw. Dekorelement ausbildbar.

Das Sichtfenster kann nicht nur durch den transparenten (und vorzugsweise klarsichtigen) Teil der Seitenwand sondern ebenfalls auch durch einen transparenten oder transluzenten Bereich des Dekorelements zumindest mit ausgebildet werden. Dies ist abhängig von den gewünschten Dekoren und von dem zu verwendenden Design.

Weiter kann das Flächenelement für eine einfache Ausbildung eines Sichtfensters durch einen transparenten oder transluzenten Bereich des Flächenelements ausgebildet sein, wobei eine Ausnehmung in der weiteren Seitenwand abgedeckt wird. Dabei kann das weitere Aufbewahrungsbehältnis aus einem opaken oder vollständig lichtundurchlässigen Material hergestellt sein und das Flächenelement muss nur wenig größer als die betreffende Ausnehmung sein. Im einfachsten Fall ist das Flächenelement ein vollflächig transparenter, im IML-Spritzgussverfahren eingesetzter Folienstreifen, der insbesondere nur wenig größer als die Ausnehmung der weiteren Seitenwand ist.

Eine vorteilhafte Ausgestaltung eines Aufbewahrungsbehälters mit der Möglichkeit, einen Wasserpegel/-stand gut zu erkennen, ist durch einen Aufbewahrungsbehälter geschaffen, bei dem das Sichtfenster auf seiner Außenseite eine niedrigere Rauigkeit aufweist als auf der Innenseite, wobei die Unterschiede der Rauigkeiten dergestalt ausgelegt sind, dass nur der mit Wasser in Kontakt stehende Bereich des begrenzten Teils des Sichtfensters durchsichtig erscheint. Die Außenseite des Sichtfensters, sei es nun durch das Dekorelement oder die weitere Seitenwand augebildet, ist hierbei vorzugsweise möglichst glatt ausgebildet, während innenseitig die Oberfläche eine durch beispielsweise erodierte Spritzgusswerkzeugoberflächen hergestellte Rauigkeit aufweist. Vorzugsweise liegen die Oberflächenrauigkeiten auf der Innenseite zwischen 20 und 40, vorzugsweise bei 24, gemäß der VDI-Richtlinie 3400. Der Abschnitt des Sichtfensters mit innenseitigem Wasserkontakt ist somit von außen klar und einsichtig erkennbar, während der Abschnitt oberhalb der Wasserstandslinie matt erscheint.

Eine besonders wertig anmutende Variante eines Aufbewahrungsbehälters ist mit einem vorzugsweise als Dekorelement ausgebildeten Flächenelement versehen, welches als In-Mould-Label ausgebildet ist. Ein solches Label ist integrierter Teil der Seitenwand.

Vorteilhafterweise weist der Aufbewahrungsbehälter wenigstens eine, insbesondere jedoch mehrere durch das Dekorelement ausgebildete Markierungen zur Ausbildung einer Wasserstandskala auf. Hierdurch ist die Handhabung gerade für unterschiedliche Topfgrößen und je nach Transport- und Verkaufssituation unterschiedliche Wassermengen erleichtert.

Zur Anordnung eines Pflanztopfes vorzugsweise oberhalb des Wasserreservoirs weist der Aufbewahrungsbehälter eine vom untersten Bodenbereich beabstandete Auflagefläche auf, auf der sich ein Pflanztopf abstützen kann. Hierbei kann es sich um eine Auflagefläche durch eine domartige Erhebung des Bodens, eine konisch zulaufende Seitenwand, über die ein Pflanztopf festklemmt werden kann oder eine Schulter in der Seitenwand handeln.

Weiterhin gereicht es der Erfindung zum Vorteil, wenn die Auflagefläche in Form eines winklig abstehenden Kragens bzw. einer Schulter am oberen Rand ausgebildet ist, wobei dieser Kragen von einem weiteren Randabschnitt nach außen begrenzt werden kann, um einen festen Sitz des Pflanztopfes gewährleisten zu können. Es kann sich jedoch auch um Oberseiten von an der Innenseite der Seitenwand angeordneten Stützstegen oder Stützrippen handeln, wenn der Aufbewahrungsbehälter eine Seitenwand mit einer glatten, äußeren Oberfläche aufweisen soll.

Um eine Belüftung des Wasserreservoirs zu gewährleisten können in der Auflagefläche des Kragens bzw. der Schulter Erhöhungen und/oder Vertiefungen über den Umfang verteilt angeordnet sein.

Zur Ausbildung einer Zentrier- und/oder Dichtlippe kann die Seitenwand auf ihrer Innenseite einen vorzugsweise randnah, nach innen vorspringenden Flansch zur Ausbildung einer Zentrier- und/oder Dichtlippe aufweist. Hierdurch wird das Einführen eines Pflanztopfes in den Aufbewahrungsbehälter vereinfacht und durch das Anliegen des Pflanztopfes an der Dichtlippe kann ein Verschütten von Wasser während des Transports reduziert werden. Gleichzeitig steifen sich der Pflanztopf und der Aufbewahrungsbehälter insbesondere randnah aus. Unter randnah wird eine Anordnung im bzw. am obersten Viertel der Seitenwand verstanden.

Weitere Vorteile und Einzelheiten der Erfindung sind der nachfolgenden Figurenbeschreibung zu entnehmen. In den Figuren zeigt schematisch dargestellt:
Fig. 1 ein erster erfindungsgemäßer Aufbewahrungsbehälter mit integriertem Pflanztopf,
Fig. 2 den Gegenstand nach Fig. 1 in einer Schnittdarstellung,
Fig. 3 einen weiteren erfindungsgemäßen Aufbewahrungsbehälter.

Sofern sinnvoll, werden funktional gleichwirkende Elemente mit identischen Bezugsziffern versehen.

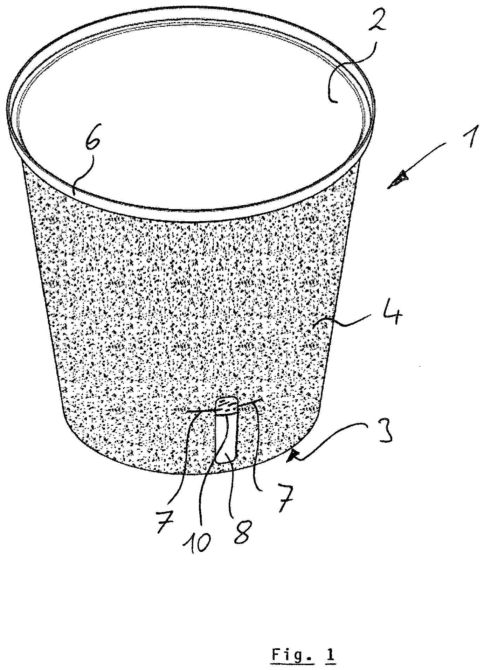

Ein erfindungsgemäßer Aufbewahrungsbehälter 1 ist gemäß Fig. 1 mit einem Pflanztopf 2 versehen. Am unteren Ende des Aufbewahrungsbehälters 1 befindet sich ein Boden 3, der mit einer Seitenwand 4 ein Wasserreservoir ausbildet. Dieses dient zur Aufnahme von Wasser und zur Versorgung des integrierten Pflanztopfes 2 mit Wasser. Die Seitenwand 4 weist über die gesamte Höhe mit Ausnahme eines oberen, über einen Kragen nach außen gestellten Randes 6 ein als Dekorelement ausgebildetes Flächenelement auf, welches als Dekor eine Vielzahl von kleinen Mustern besitzt und im IML-Verfahren eingesetzt wurde. Weiterhin umfasst das Dekorelement mehrere Markierungen 7, die einen maximalen Wasserstand bzw. eine maximale Füllhöhe des Wasserreservoirs anzeigen sollen.

Beide Markierungen 7 sind seitlich einer Wasserstandanzeige angeordnet, die durch ein Sichtfenster 8 ausgebildet wird. Dieses Sichtfenster 8 wird durch eine Ausnehmung im Dekorelement und den transparenten Kunststoff der weiteren Seitenwand 4 im dekorfreien Bereich ausgebildet. Die durch das Dekorelement erfolgende Begrenzung des transparenten Bereichs des Sichtfensters 8 wird somit als mit zum Sichtfenster 8 gehörig betrachtet.

In der Fig. 1 ist im oberen Bereich des Sichtfensters ein schraffierter Bereich zu erkennen, der sich aus der Abwesenheit von Wasser an der rauen innenseitigen Oberfläche des Sichtfensters 8 ergibt. Der untere von Wasser benetzte innenseitige Bereich erscheint durchsichtig, so dass eine Übergangslinie 10 den Wasserpegel darstellt.

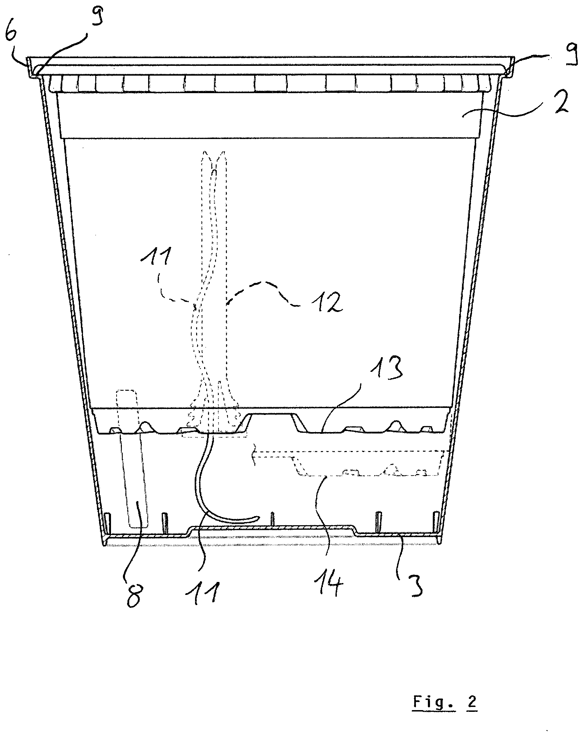

Der Pflanztopf 2 ist nach Fig. 2 beabstandet vom Boden 3 in dem als Dekorübertopf und Transportbehälter ausgebildeten Aufbewahrungsbehälter 1 hängend angeordnet, wobei ein oberer Rand des Pflanztopfes 2 auf einer Auflagefläche 9 aufliegt, die von einem am oberen Ende der Seitenwand 4 gebildeten Kragen, der in den Rand 6 übergeht, gebildet wird.

Das Dekorelement ist als In-Mould-Label während der Herstellung des Aufbewahrungsbehälters 1 als integraler Teil der Seitenwand 4 ausgebildet.

Der Pflanztopf 2, der an der Auflagefläche 9 des oberen Kragens aufliegt, ist innenseitig mit einem einen Docht 11 haltenden Dochthalter 12 versehen, der in einen Pflanztopfboden 13 eingesteckt und in diesem befestigt ist. Das untere Ende des Dochtes 11 ist im Wasserreservoir und kann somit zur Versorgung des im Pflanztopf 2 befindlichen Substrats bzw. der Pflanzen mit Wasser beitragen. Gestrichelte Linien 14 zeigen die Aufnahme eines höheren Pflanztopfes in dem Aufbewahrungsbehälter 1.

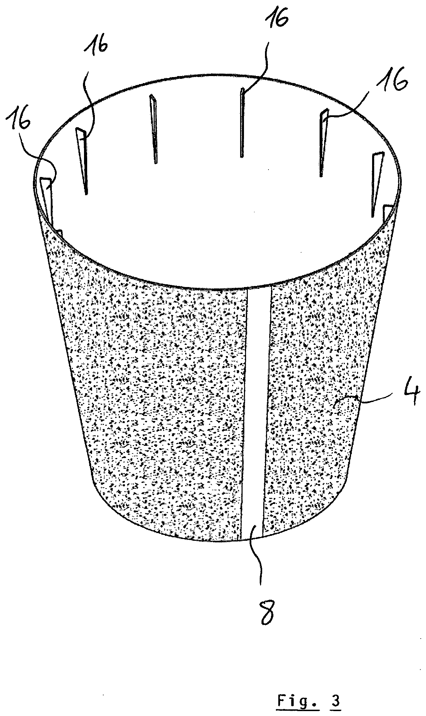

Gemäß Fig. 3 kann der Pflanztopf 2 auch über Stützrippen 16 gehalten werden, die innenseitig im Aufbewahrungsbehälter 1 umlaufend angeordnet sind. Auch hierbei ist der Aufbewahrungsbehälter 1 überwiegend aus transparentem Kunststoff ausgebildet, wobei dies nicht für das Dekorelement gilt. Dieses ist im Ausführungsbeispiel gemäß Fig. 3 nicht umlaufend ausgebildet, sondern begrenzt über die nahezu gesamte Höhe der Seitenwand 4 des Behälters 1 ein streifenförmiges Sichtfenster 8, durch das ein Wasserpegel erkennbar ist. Insbesondere kann es sich hierbei um eine außenseitig glatt polierte Fläche des Sichtfensters 8 handeln, welche innenseitig mit einer Oberflächenrauigkeit zwischen 20 und 40 gemäß VDI 3400 versehen ist, so dass der oberhalb des Wasserpegels befindliche Teil des Sichtfensters 8 weniger durchsichtig bzw. matt erscheint, und nur der von Wasser benetzte untere Teil durchsichtig ist.

## Patentansprüche

1. Aufbewahrungsbehälter für einen Pflanztopf, mit einem Boden, mit einer mit dem Boden (3) verbundenen Seitenwand (4) sowie mit einer Wasserstandanzeige, wobei der Aufbewahrungsbehälter (1) mit dem Boden (3) und vorzugsweise zumindest einem Teil der Seitenwand (4) ein Wasserreservoir ausbildet, **dadurch gekennzeichnet, dass** die Seitenwand (4) wenigstens ein folienartiges und als Dekorelement ausgebildetes Flächenelement umfasst, welches eine ein Sichtfenster (8) aufweisende Wasserstandanzeige zur Anzeige eines Wasserstandes des Wasserreservoirs zumindest mit ausbildet und wenigstens teilweise die Außenwand des Aufbewahrungsbehälters ausbildet, wobei die Seitenwand (4) ohne ihr Dekorelement zumindest teilweise aus einem transparenten Kunststoff ausgebildet ist.

2. Aufbewahrungsbehälter nach einem der vorherigen Ansprüche, **dadurch gekennzeichnet, dass** ein dekorelementfreier Teil der Seitenwand (4) das Sichtfenster (8) zumindest mit ausbildet.

3. Aufbewahrungsbehälter nach einem der vorherigen Ansprüche, **dadurch gekennzeichnet, dass** das Dekorelement das Sichtfenster (8) begrenzt.

4. Aufbewahrungsbehälter nach Anspruch 3, **dadurch gekennzeichnet, dass** das Dekorelement das Sichtfenster (8) über die gesamte Höhe der Seitenwand (4) begrenzt.

5. Aufbewahrungsbehälter nach einem der vorherigen Ansprüche, **dadurch gekennzeichnet, dass** das Sichtfenster (8) durch einen transparenten oder transluzenten Bereich des Dekorelements zumindest mit ausgebildet wird.

6. Aufbewahrungsbehälter nach Anspruch 5, **dadurch gekennzeichnet, dass** die weitere Seitenwand in diesem Bereich des Dekorelements ausgenommen ist.

7. Aufbewahrungsbehälter nach einem der vorherigen Ansprüche, **dadurch gekennzeichnet, dass** das Sichtfenster (8) auf seiner Außenseite eine niedrigere Rauigkeit aufweist als auf der Innenseite, dergestalt, dass nur der mit Wasser in Kontakt stehende Bereich des Sichtfensters durchsichtig erscheint.

8. Aufbewahrungsbehälter nach einem der vorherigen Ansprüche , **dadurch gekennzeichnet, dass** das Sichtfenster (8) insbesondere zumindest außenseitig teilweise konvex ausgebildet ist.

9. Aufbewahrungsbehälter nach einem der vorherigen Ansprüche, **dadurch gekennzeichnet, dass** das Flächenelement als In-Mould-Label ausgebildet ist.

10. Aufbewahrungsbehälter nach einem der vorherigen Ansprüche, **dadurch gekennzeichnet, dass** das Flächenelement innen- oder außenseitig auf die weitere Seitenwand aufgedruckt oder als Aufkleber aufgeklebt ist.

11. Aufbewahrungsbehälter nach einem der vorherigen Ansprüche, **dadurch gekennzeichnet, dass** der Aufbewahrungsbehälter (1) insbesondere im Dekorelement vorhandene Markierungen (7) zur Ausbildung einer Wasserstandskala aufweist.

12. Aufbewahrungsbehälter nach einem der vorherigen Ansprüche, **gekennzeichnet durch** eine vom untersten Bodenbereich (3) beabstandete Auflagefläche (9).

13. Aufbewahrungsbehälter nach Anspruch 12, **dadurch gekennzeichnet, dass** die Auflagefläche (9) in Form eines winklig abstehenden Kragens und/oder von an der Innenseite der Seitenwand (4) angeordneten Stützrippen (16) ausgebildet ist.

14. Aufbewahrungsbehälter nach Anspruch 13, **gekennzeichnet durch** in der Auflagefläche verteilt angeordnete Erhöhungen und/oder Vertiefungen zur Ausbildung von Belüftungsöffnungen.

15. Aufbewahrungsbehälter nach einem der vorherigen Ansprüche, **dadurch gekennzeichnet, dass** die Seitenwand (4) auf ihrer Innenseite einen vorzugsweise randnah nach innen vorspringenden Flansch zur Ausbildung einer Zentrier- und/oder Dichtlippe aufweist.

16. Aufbewahrungsbehälter nach einem der vorherigen Ansprüche, **gekennzeichnet durch** mehrere Sichtfenster (8).

## Claims

1. Storage container for a plant pot, the container comprising a base, a lateral wall (4) connected to the base (3) and a water level indicator, the storage container (1) forming a water reservoir together with the base (3) and preferably at least part of the lateral wall (4), **characterised in that** the lateral wall (4) comprises at least one film-like surface element designed as a decorative element, which surface element at least also forms a water level indicator having a viewing window (8) for displaying a water level of the water reservoir and at least partially forms the outer wall of the storage container, the lateral wall (4), except for the decorative element thereof, being made of a transparent plastics material at least in part.

2. Storage container according to the preceding claim, **characterised in that** a decorative element-free part of the lateral wall (4) at least also forms the viewing window (8).

3. Storage container according to either of the preceding claims, **characterised in that** the decorative element defines the viewing window (8).

4. Storage container according to claim 3, **characterised in that** the decorative element defines the viewing window (8) over the entire height of the lateral wall (4).

5. Storage container according to any of the preceding claims, **characterised in that** the viewing window (8) is at least also formed by a transparent or translucent region of the decorative element.

6. Storage container according to claim 5, **characterised in that** the further lateral wall is recessed in this region of the decorative element.

7. Storage container according to any of the preceding claims, **characterised in that** the viewing window (8) has a lower roughness on the outer face thereof than on the inner face such that only the region of the viewing window that is in contact with water appears transparent.

8. Storage container according to any of the preceding claims, **characterised in that** the viewing window (8) is formed in particular so as to be partially convex at least on the outside.

9. Storage container according to any of the preceding claims, **characterised in that** the surface element is designed as an in-mould label.

10. Storage container according to any of the preceding claims, **characterised in that** the surface element is printed on the inside or outside of the further lateral wall or glued on as a sticker.

11. Storage container according to any of the preceding claims, **characterised in that** the storage container (1) has markings (7) which are present in particular in the decorative element and intended for forming a water level scale.

12. Storage container according to any of the preceding claims, **characterised by** a bearing surface (9) spaced apart from the lowermost base region (3).

13. Storage container according to claim 12, **characterised in that** the bearing surface (9) is in the form of a collar protruding at an angle and/or support ribs (16) arranged on the inner face of the lateral wall (4).

14. Storage container according to claim 13, **characterised by** raised portions and/or depressions which are arranged so as to be distributed in the bearing surface and are intended for forming ventilation openings.

15. Storage container according to any of the preceding claims, **characterised in that** the inner face of the lateral wall (4) has a flange which is preferably close to the edge, projects inwards and is intended for forming a centring and/or sealing lip.

16. Storage container according to any of the preceding claims, **characterised by** a plurality of viewing windows (8).

## Revendications

1. Récipient de stockage pour un pot de plante, avec un fond, avec une paroi latérale (4) reliée au fond ainsi qu'avec un indicateur de niveau d'eau, le récipient de stockage (1) constituant un réservoir d'eau avec le fond (3) et de préférence au moins une partie de la paroi latérale (4), **caractérisé en ce que** la paroi latérale (4) comprend au moins un élément de surface sous forme de film et réalisé comme un élément décoratif réalisant au moins conjointement un indicateur de niveau d'eau comportant une lucarne de contrôle (8) pour indiquer un niveau d'eau du réservoir d'eau et réalisant au moins en partie la paroi extérieure du récipient de stockage, dans lequel la paroi latérale (4) sans son élément décoratif est réalisée au moins en partie à partir d'une matière plastique transparente.

2. Récipient de stockage selon la revendication précédente, **caractérisé en ce qu'**une partie sans élément décoratif de la paroi latérale (4) réalise au moins partiellement la lucarne de contrôle (8).

3. Récipient de stockage selon l'une quelconque des revendications précédentes, **caractérisé en ce que** l'élément décoratif délimite la lucarne de contrôle (8).

4. Récipient de stockage selon la revendication 3, **caractérisé en ce que** l'élément décoratif délimite la lucarne de contrôle (8) sur toute la hauteur de la paroi latérale (4).

5. Récipient de stockage selon l'une quelconque des revendications précédentes, **caractérisé en ce que** la lucarne de contrôle (8) est réalisée au moins conjointement par une zone transparente ou translucide de l'élément décoratif.

6. Récipient de stockage selon la revendication 5, **caractérisé en ce que** le reste de la paroi latérale est évidée dans ladite zone de l'élément décoratif.

7. Récipient de stockage selon l'une quelconque des revendications précédentes, **caractérisé en ce que** la lucarne de contrôle (8) présente sur sa face extérieure une rugosité inférieure à celle sur la face intérieure de sorte que seule la zone de la lucarne de contrôle en contact avec l'eau présente un aspect transparent.

8. Récipient de stockage selon l'une quelconque des revendications précédentes, **caractérisé en ce que** la lucarne de contrôle (8) est réalisée de manière partiellement convexe, en particulier au moins du côté extérieur.

9. Récipient de stockage selon l'une quelconque des revendications précédentes, **caractérisé en ce que** l'élément de surface est réalisé sous forme d'étiquette surmoulée.

10. Récipient de stockage selon l'une quelconque des revendications précédentes, **caractérisé en ce que** l'élément de surface est imprimé sur le reste de la paroi latérale du côté intérieur ou extérieur ou y est apposé sous forme d'étiquette.

11. Récipient de stockage selon l'une quelconque des revendications précédentes, **caractérisé en ce que** le récipient de stockage (1) présente des repères (7) existants en particulier dans l'élément décoratif pour réaliser une graduation de niveau d'eau.

12. Récipient de stockage selon l'une quelconque des revendications précédentes, **caractérisé par** une surface d'appui (9) espacée de la zone de fond (3) inférieure.

13. Récipient de stockage selon la revendication 12, **caractérisé en ce que** la surface d'appui (9) est réalisée sous la forme d'une collerette faisant saillie selon un angle et/ou de nervures de support (16) disposées sur la face intérieure de la paroi latérale (4).

14. Récipient de stockage selon la revendication 13, **caractérisé par** des reliefs et/ou des creux disposés de manière répartie dans la surface d'appui pour réaliser des orifices d'aération.

15. Récipient de stockage selon l'une quelconque des revendications précédentes, **caractérisé en ce que** la paroi latérale (4) présente sur sa face intérieure une bride faisant saillie vers l'intérieur, de préférence près du bord, pour réaliser une lèvre de centrage et/ou d'étanchéité.

16. Récipient de stockage selon l'une quelconque des revendications précédentes, **caractérisé par** plusieurs lucarnes de contrôle (8).
